# EUROPÄISCHE PATENTANMELDUNG

(11) **EP 4 112 421 A1**
(43) Veröffentlichungstag der Anmeldung: **04.01.2023**
(21) Anmeldenummer: 22177190.0
(22) Anmeldetag: 03.06.2022
(51) Int. Cl.: B61L 23/06, G01S 19/06, G01S 19/11

(54) **WARNANLAGE UND VERFAHREN ZUM BETREIBEN DER WARNANLAGE MIT MINDESTENS EINEM PERSÖNLICHEN WARNGERÄT**

(30) Priorität: 24.06.2021 DE 102021206538
(71) Anmelder: Siemens Mobility GmbH, 81739 München (DE)
(72) Erfinder: Bravo Vera, Antonio, 38124 Braunschweig (DE); Müller, Julia, 10245 Berlin (DE); Qazi, Sheheryar Zahoor, 88131 Lindau am Bodensee (DE); Schicktanz, Florian, 10437 Berlin (DE)

(57) **Zusammenfassung**

Gegenstand der Erfindung ist ein Verfahren zum Betreiben einer Warnanlage mit mindestens einem Warngerät (PD1 ... PD4) für den persönlichen Gebrauch durch einen Arbeiter, insbesondere Gleisarbeiter (GLA), bei dem bei einer Inbetriebnahme des Warngerätes zwischen dem Warngerät (PD1 ... PD4) und mindestens einer Zentraleinheit (BZT) der Warnanlage eine Kommunikationsverbindung (K4) aufgebaut wird. Nach dem Aufbau der Kommunikationsverbindung (K4) wird das Warngerät (PD1 ... PD4) durch die Zentraleinheit (BZT) mit einem ersten Ortungssystem wiederholt geortet. Aus einer anfänglichen Ortung wird eine initiale Ortsinformation für das Warngerät (PD1 ... PD4) generiert. Die initiale Ortsinformation wird als Referenzposition des Warngerätes (PD1 ... PD4) gespeichert. Ferner umfasst die Erfindung eine Warnanlage, ein Warngerät (PD1 ... PD4) für eine Warnanlage, eine Zentraleinheit für eine Warnanlage, ein Computerprogrammprodukt sowie eine Bereitstellungsvorrichtung für das Computerprogrammprodukt.

## Beschreibung

Die Erfindung betrifft ein Verfahren zum Betreiben einer Warnanlage mit mindestens einem Warngerät für den persönlichen Gebrauch durch einen Arbeiter, insbesondere Gleisarbeiter, bei dem bei einer Inbetriebnahme des Warngerätes zwischen dem Warngerät und mindestens einer Zentraleinheit der Warnanlage eine Kommunikationsverbindung aufgebaut wird. Außerdem betrifft die Erfindung eine Warnanlage mit mindestens einem Warngerät für den persönlichen Gebrauch durch einen Arbeiter, insbesondere Gleisarbeiter, bei dem bei einer Inbetriebnahme des Warngerätes zwischen dem Warngerät und mindestens einer Zentraleinheit der Warnanlage eine Kommunikationsverbindung aufgebaut wird. Weiterhin betrifft die Erfindung ein Warngerät für eine Warnanlage sowie eine Zentraleinheit für eine Warnanlage. Zuletzt betrifft die Erfindung ein Computerprogrammprodukt sowie eine Bereitstellungsvorrichtung für dieses Computerprogrammprodukt, wobei das Computerprogrammprodukt mit Programmbefehlen zur Durchführung dieses Verfahrens ausgestattet ist.

Es ist bekannt, in Rottenwarnsystemen persönliche Endgeräte (Personal Devices, kurz PDs) zu verwenden, die von den einzelnen Mitarbeitern der Rotte getragen werden. Diese Endgeräte sind dafür ausgelegt, den Mitarbeiter vor einem nahenden Zug individuell zu warnen. Hierfür wird ein Näherungssignal ausgegeben, welches durch den Mitarbeiter wahrgenommen wird. Dabei kann es sich beispielsweise um einen Vibrationsalarm, einen Warnton oder auch ein optisches Signal handeln.

Solche persönlichen Endgeräte sind zum Beispiel in der WO2020/094650A1 beschrieben. Da die Rotte aus mehreren Gleisarbeitern besteht, werden auch mehrere persönliche Endgeräte verwendet, die gemeinsam durch eine zentrale Einheit angesteuert werden. Zu diesem Zweck baut die Zentraleinheit eine Kommunikationsverbindung zu den Endgeräten her. Um eine individuelle Warnung der Gleisarbeiter zu gewährleisten, müssen diese in der Baustelle auch geortet werden, um die individuelle Gefahr abschätzen zu können.

Die Methode, Warngeräte in einem Rottenwarnsystem zusammenzufassen, birgt jedoch auch die Gefahr, dass das Endgerät nicht exakt geortet werden könnte. Die Konsequenzen für den betroffenen Mitarbeiter wären jedoch fatal. Er würde sich auf ein individuelles Warnsignal verlassen, welches ausbliebe und ihn daher nicht vor der herannahenden Gefahr warnen könnte.

Grundsätzlich ist es bekannt, persönliche Geräte zu orten. Dies wird beispielsweise mit Smartphones durchgeführt. Allerdings ist bei sicherheitsrelevanten Anwendungen wie Warnräten eine genügend akkurate Ortung erforderlich, um ein gefordertes Sicherheitsniveau hinsichtlich der Zuverlässigkeit der Warnungen zu erreichen.

Zum Orten von Geräten sind unterschiedliche Methoden bekannt. Diese erreichen allerdings im Allgemeinen nicht die für das o. g. Warngerät erforderliche Genauigkeit. Beispielsweise ist es möglich, GPS mit WLAN (auch WIFI genannt) zu kombinieren. Allerdings lassen sich hierbei lediglich Genauigkeiten von 5 m oder kleiner erreichen, was für die genannten Anwendungsfälle nicht ausreichend ist.

Einen anderen Standard bietet Bluetooth. Bluetooth erreicht Genauigkeiten von 2 m oder kleiner, jedoch sind die Reichweiten von bis zu 6 m nicht ausreichend, um einen genügenden Aktionsradius für das Warngerät zu gewährleisten.

Die Aufgabe der Erfindung ist es, ein Warngerät für den persönlichen Gebrauch durch einen Arbeiter, insbesondere Gleisarbeiter, eine Warnanlage für Arbeiter und Verfahren zum Betreiben eines Warngeräts für Arbeiter, insbesondere Gleisarbeiter anzugeben, welches die Arbeiter vergleichsweise zuverlässig vor der Gefahr warnt. Außerdem besteht die Aufgabe der Erfindung darin, ein Computerprogrammprodukt sowie eine Bereitstellungsvorrichtung für dieses Computerprogrammprodukt anzugeben, mit dem das vorgenannte Verfahren durchgeführt werden kann.

Diese Aufgabe wird mit dem eingangs angegebenen Anspruchsgegenstand (Verfahren) erfindungsgemäß dadurch gelöst, dass nach dem Aufbau der Kommunikationsverbindung das Warngerät durch die Zentraleinheit mit einem ersten Ortungssystem wiederholt geortet wird, aus einer anfänglichen Ortung eine initiale Ortsinformation für das Warngerät generiert wird, und die initiale Ortsinformation als Referenzposition des Warngerätes gespeichert wird.

Die Warngeräte für den persönlichen Gebrauch können auch als Personal Devices bezeichnet werden. Diese tragen die Arbeiter mit sich, wobei entsprechende Warneinrichtungen wie Warnleuchten, akustische Signalgeber oder Vibratoren den Arbeiter auf eine Gefahr hinweisen können.

Die Zentraleinheit fasst mehrere Warngeräte zu einer Warnanlage zusammen. Die Zentraleinheit weist einen Computer auf, der die Steuerung der Warngerte übernimmt. Hierzu gehört, wie bereits erwähnt, auch die Ortung der Warngeräte.

Es können eine Zentraleinheit oder auch mehrere Zentraleinheiten zum Einsatz kommen. Bei dem Einsatz von mehreren Zentraleinheiten entsteht der Vorteil, dass diese an unterschiedlichen (bekannten) Orten aufgestellt werden können, um eine Ortung der Warngeräte durchzuführen. Hierdurch wird die Genauigkeit der Ortung vorteilhaft vergrößert. Dies gilt unabhängig davon, wie die Ortung erfolgt. Bei mehreren Zentraleinheiten kann beispielsweise eine Kreuzpeilung durchgeführt werden, um die Warngeräte zu lokalisieren.

Dadurch, dass das Warngerät durch die Zentraleinheit wiederholt geortet wird, ist eine Überwachung des Ortes, an dem der das Warngerät tragende Arbeiter arbeitet, möglich. Dadurch, dass aus einer anfänglichen Ortung eine initiale Ortsinformation für das Warngerät generiert wird, kann eine Referenzposition für das Warngerät gespeichert werden. Dies kann erfindungsgemäß erstmalig zu einem Zeitpunkt der Inbetriebnahme erfolgen, wo es leicht möglich ist, zu überprüfen, ob das Warngerät mit genügender Genauigkeit lokalisiert wurde. Es ist somit auch möglich, zu beurteilen, ob das Warngerät an den Arbeiter ausgegeben werden kann, um diesen in der Folgezeit mit genügender Genauigkeit zu lokalisieren.

Die Genauigkeit der nachfolgenden Messungen können mit der Zeit immer größere Abweichungen aufweisen. Im weiteren Verfahrensverlauf können Maßnahmen ergriffen werden, um die Genauigkeit über einen längeren Zeitraum des Einsatzes des Warngerätes zu gewährleisten (hierzu im Folgenden noch mehr).

Die Ortung wird mithilfe eines Ortungssystems durchgeführt. Als Ortungssystem wird eine Infrastruktur verstanden, die mithilfe technischer Einrichtungen eine Ortung ermöglicht. Diese technischen Einrichtungen sind je nach Funktionsweise des Ortungssystems in das Warngerät, in die Zentraleinheit oder in andere externe Geräte eingebaut.

Die Ortung erfolgt vorzugsweise über Funksignale. Insbesondere können zu diesem Zweck GNSS Signale (GNSS steht für Global Navigation Satellite System oder Globales Satellitennavigationssystem) verwendet werden, wie im Folgenden näher erläutert wird. Werden GNSS Signale verwendet, so besteht das erste Ortungssystem aus allen bei der Durchführung des Ordnungsverfahrens eingesetzten Geräten. Hierbei kann in dem Warngerät beispielsweise ein GNSS-Modul und in der Zentraleinheit ein korrespondierendes GNSS-Modul zum Einsatz kommen, sowie Satelliten des betreffenden GNSS Systems, die sich im Orbit der Erde im Umlauf befinden.

Unter "rechnergestützt" oder "computerimplementiert" kann im Zusammenhang mit der Erfindung eine Implementierung des Verfahrens verstanden werden, bei dem mindestens ein Computer oder Prozessor mindestens einen Verfahrensschritt des Verfahrens ausführt.

Der Ausdruck "Rechner" oder "Computer" deckt alle elektronischen Geräte mit Datenverarbeitungseigenschaften ab. Computer können beispielsweise Personal Computer, Server, Handheld-Computer, Mobilfunkgeräte und andere Kommunikationsgeräte, die rechnergestützt Daten verarbeiten, Prozessoren und andere elektronische Geräte zur Datenverarbeitung sein, die vorzugsweise auch zu einem Netzwerk zusammengeschlossen sein können.

Unter einem "Prozessor" kann im Zusammenhang mit der Erfindung beispielsweise einen Wandler einen Sensor zur Erzeugung von Messsignalen oder eine elektronische Schaltung, verstanden werden. Bei einem Prozessor kann es sich insbesondere um einen Hauptprozessor (engl. Central Processing Unit, CPU), einen Mikroprozessor, einen Mikrocontroller, oder einen digitalen Signalprozessor, möglicherweise in Kombination mit einer Speichereinheit zum Speichern von Programmbefehlen, etc. handeln. Auch kann unter einem Prozessor ein virtualisierter Prozessor oder eine Soft-CPU verstanden werden.

Unter einer "Speichereinheit" kann im Zusammenhang mit der Erfindung beispielsweise ein computerlesbarer Speicher in Form eines Arbeitsspeichers (engl. Random-Access Memory, RAM) oder Datenspeichers (Festplatte oder Datenträger) verstanden werden.

Als "Schnittstellen" können hardwaretechnisch, beispielsweise kabelgebunden oder als Funkverbindung, und/oder softwaretechnisch, beispielweise als Interaktion zwischen einzelnen Programmmodulen oder Programmteilen eines oder mehrerer Computerprogramme, realisiert sein.

Als "Cloud" soll eine Umgebung für ein "Cloud-Computing" (deutsch Rechnerwolke oder Datenwolke) verstanden werden. Gemeint ist eine IT-Infrastruktur, welche über Schnittstellen eines Netzwerks wie das Internet verfügbar gemacht wird. Sie beinhaltet in der Regel Speicherplatz, Rechenleistung oder Software als Dienstleistung, ohne dass diese auf dem die Cloud nutzenden lokalen Computer installiert sein müssen. Die im Rahmen des Cloud-Computings angebotenen Dienstleistungen umfassen das gesamte Spektrum der Informationstechnik und beinhaltet unter anderem Infrastruktur, Plattformen und Software.

Als "Programmmodule" sollen einzelne Funktionseinheiten verstanden werden, die einen erfindungsgemäßen Programmablauf von Verfahrensschritten ermöglichen. Diese Funktionseinheiten können in einem einzigen Computerprogramm oder in mehreren miteinander kommunizierenden Computerprogrammen verwirklicht sein. Die hierbei realisierten Schnittstellen können softwaretechnisch innerhalb eines einzigen Prozessors umgesetzt sein oder hardwaretechnisch, wenn mehrere Prozessoren zum Einsatz kommen.

Gemäß einer Ausgestaltung der Erfindung ist vorgesehen, dass die Ortung des Warngerätes durch GNSS Signale erfolgt, die durch die Zentraleinheit erzeugt werden.

GNSS bezeichnet Satellitensysteme, die die terrestrische Ordnung von Objekten ermöglichen. Ein Beispiel hierfür ist GPS (Global Position System) . Es ist bekannt, dass der Empfang von gleichzeitig mehreren Satelliten, der für eine zuverlässige Ortung des Objektes erforderlich ist, nicht an allen Orten der Erdoberfläche gewährleistet ist.

Hier setzt diese Ausgestaltung der Erfindung an, indem die Zentraleinheit ebenfalls Signale des verwendeten GNSS versendet. Die mindestens eine Zentraleinheit kann vorteilhaft derart positioniert werden, dass ein zuverlässiger Empfang durch die Warngeräte gewährleistet ist. Außerdem kann die Zentraleinheit in Kombination mit den Satelliten des betreffenden GNSS gemeinsam verwendet werden. Mit anderen Worten empfangen die Warngeräte sowohl Signale von den Satelliten als auch von der Zentraleinheit, die sie zusammen mit den Satellitensignalen verarbeiten. Die Zentraleinheit kann deswegen auch als Pseudolit bezeichnet werden. Ein Pseudolit emuliert die Signale eines Satelliten und lässt sich so in eine Ortung mittels des GNSS integrieren.

Dadurch, dass die Zentraleinheit ebenfalls GNSS Signale sendet, steht neben verfügbaren GNSS Satellitensignalen zusätzliche mindestens ein weiteres GNSS Signal für die Ortungsfunktion der Warngeräte zur Verfügung. Es ist bekannt, dass die Genauigkeit der Ortung mit der Anzahl empfangbarer GNSS Signale steigt. Daher wirkt sich die Zentraleinheit nicht nur positiv auf eine initiale Ortung des Warngerätes aus, sondern auch darauf, im weiteren Verlauf des durch die Warnanlage durchgeführten Überwachungsverfahrens zum Schutz der Arbeiter möglichst genaue Ortungsinformation zu generieren.

Werden mehrere Zentraleinheiten verwendet, kann die Genauigkeit der Ortung weiter verbessert werden. Dies wird dadurch möglich, dass mehrere GNSS Signale durch Zentraleinheiten zur Verfügung gestellt werden. Eine andere Möglichkeit besteht darin, insbesondere bei unübersichtlichem Terrain das Einsatzgebiet der Bahnanlage zu vergrößern, indem der jeweilige Wirkungskreis einzelner Zentraleinheiten zu einem großen Wirkungskreis zusammengefasst wird. Dabei müssen sich die Wirkungsgebiete der einzelnen Zentraleinheiten zumindest überschneiden, damit ein einheitliches Einsatzgebiet entsteht.

Die Sendeleistung der Zentraleinheit muss ausreichen, um ein bestimmtes Gebiet, in dem sich die Arbeiter befinden müssen, mit den GNSS-Signalen zu versorgen. Nur in diesem Gebiet werden die von der Zentraleinheit ausgesendeten GNSS Signale von GNSS Geräten, also zum Beispiel den Warngeräten, empfangen und verarbeitet. Dabei unterstützen sie die Navigation bzw. Ortung des Objektes, welches das GNSS Gerät nutzt. Im erfindungsgemäßen Fall handelt sich dabei um die Arbeiter. Wegen der örtlichen Begrenzung der Ausbreitung des GNSS Signals, welches von der Zentraleinheit stammt, wird die Navigation von nicht betroffenen (weil nicht am erfindungsgemäßen Verfahren beteiligt) GNSS Geräten außerhalb des Wirkungskreises der Zentraleinheit nicht gestört.

Gemäß einer Ausgestaltung der Erfindung ist vorgesehen, dass die Ortung des Warngerätes durch GPS-Signale erfolgt, die durch die Zentraleinheit erzeugt werden, wobei die L1-Frequenz und die L2-Fequenz des GPS-Verfahrens verwendet werden.

Auf der L1-Frequenz (1575,42 MHz) werden bei GPS der C/A-Code ("Coarse/Acquisition") für die zivile Nutzung, und trennbar überlagert dazu der nicht öffentlich bekannte P/Y-Code ("Precision/encrypted") für die militärische Nutzung eingesetzt. Das übertragene Datensignal ist bei beiden Codefolgen identisch und stellt die 1500 Bit lange Navigationsnachricht dar. Sie enthält alle wichtigen Informationen zum Satelliten, Datum, Identifikationsnummer, Korrekturen, Bahnen, aber auch den Zustand, und benötigt zur Übertragung eine halbe Minute. GPS-Empfänger speichern diese Daten normalerweise zwischen. Zur Initialisierung der Geräte werden die Daten eines Almanaches übertragen, die die groben Bahndaten aller Satelliten enthalten und zur Übertragung über zwölf Minuten benötigen.

Die zweite Frequenz L2-Frequenz (1227,60 MHz) überträgt nur den P/Y-Code. Wahlweise kann auf der zweiten Frequenz der C/A-Code übertragen werden. Durch die Übertragung auf zwei Frequenzen können Effekte in der Ionossphäre, die zur Erhöhung der Laufzeit führen, herausgerechnet werden, was die Genauigkeit steigert. Im Rahmen der GPS-Modernisierung wird seit 2005 (Satelliten des Typs IIR-M und IIF) zusätzlich ein neuer ziviler C-Code (L2C) mit optimierter Datenstruktur übertragen, was das Zweifrequenzverfahren auch für zivile Nutzungen zugänglich macht.

Wie bereits erläutert, können die vorstehend beschriebenen GPS-Signale auch durch die Zentraleinheit generiert werden. Die Sendeleistung der Zentraleinheit beschränkt wie erwähnt aus die Signalausbreitung auf ein bestimmtes Gebiet, in dem sich die Arbeiter befinden müssen.

Gemäß einer Ausgestaltung der Erfindung ist vorgesehen, dass die ermittelte Ortsinformation des Warngerätes mit einer Ausgabeeinrichtung angezeigt wird.

Als Ausgabeeinrichtung kann beispielsweise ein Display oder ein Bildschirm verwendet werden. Dies macht vorteilhaft die intuitive Überprüfung des ermittelten Ortes beispielsweise durch den das Warngerät tragenden Arbeiter möglich. Für diesen Fall muss die Ausgabeeinrichtung in das Warngerät integriert sein, welches der Arbeiter mit sich führt. Es ist aber auch möglich, dass die Ausgabeeinrichtung als Teil der Zentraleinheit ausgeführt ist. In diesem Fall kann eine Überprüfung des Ortes der die betreffenden Warngeräte tragenden Arbeiter beispielsweise durch einen Vorarbeiter oder dergleichen, der sich bei der Zentraleinheit befindet, durchgeführt werden.

Sollte eine Abweichung des dargestellten Ortes von dem tatsächlichen Ort erkennbar werden, so kann der Arbeiter seine Arbeit unterbrechen und zur Zentraleinheit zurückkehren. Dort kann beispielsweise das Verfahren neu gestartet werden, d. h. eine initiale Ortung des betroffenen Arbeiters mit hoher Genauigkeit durchgeführt werden.

Gemäß einer Ausgestaltung der Erfindung ist vorgesehen, dass die ermittelte Ortsinformation erst als Referenzposition gespeichert wird, wenn die mit der Ausgabereinrichtung angezeigte Ortsinformation bestätigt wird.

Die ermittelte Ortsinformation kann somit auch bei der Initialisierung des Warengerätes dazu genutzt werden, um das ermittelte Ortungsergebnis beispielsweise durch den das Warngerät tragenden Arbeiter zu überprüfen. Dies stellt einen zusätzlichen Sicherheitsgewinn dar. Durch die intuitive Überprüfungsmöglichkeit wird vorteilhaft auch das Vertrauen, dass der Arbeiter in das Warngerät hat, vergrößert. Sollte eine zu große Abweichung bei der initialen Ortung festgestellt werden, so kann das Verfahren der Initialisierung wiederholt werden.

Gemäß einer Ausgestaltung der Erfindung ist vorgesehen, dass das Warngerät mit einem zweiten Ortungssystem mindestens eine alternative Ortsinformation generiert.

Im Zusammenhang mit der Beschreibung dieser Erfindung erzeugt das erste Ortungssystem immer Ortsinformationen und das zweite Ortungssystem alternative Ortsinformationen. An dieser Begrifflichkeit wird im Folgenden festgehalten. Der Einsatz eines zweiten Ortungssystems hat zwei wesentliche Vorteile.

Zum einen entsteht Redundanz, solange beide Ortungssysteme Ortsinformationen (also Ortsinformationen und alternative Ortsinformationen) liefern. Durch einen Vergleich der Ortsinformationen mit den alternativen Ortsinformationen kann bei einem Abweichen der durch die beiden Ortungssysteme ermittelten Orte als Reaktion eine Maßnahme eingeleitet werden. Die Maßnahme kann beispielsweise in der Ausgabe eines Warnsignals bestehen. Der Arbeiter kann dann zur Zentraleinheit zurückkehren, um sein Warngerät neu zu initialisieren.

Die Maßnahme kann im Falle einer erkannten Gefahr, beispielsweise eines sich nähernden Zuges bei einer Gleisbaustelle, auch darin bestehen, die Gefahr abzuwenden oder zu minimieren. Bei einem sich nähernden Zug kann beispielsweise eine Notbremsung oder zumindest eine Abbremsung ausgelöst werden. Dies setzt voraus, dass die Zentraleinheit beispielsweise mit der Leitzentrale eines Zugleitsystems kommuniziert. Die Leitzentrale hat Zugriff auf den sich nähernden Zug und kann eine geeignete Maßnahme einleiten.

Der zweite Vorteil besteht darin, dass in dem Fall, dass eines der Ortungssysteme (also das erste Ortungssystem oder das zweite Ortungssystem) keine Daten liefert, das andere Ortungssystem die Überwachung des Einsatzortes des Arbeiters temporär allein übernehmen kann. Sobald wieder beide Ortungssysteme zur Verfügung stehen, kann ein Abgleich erfolgen, um wieder zu dem normalen Ablauf des Ortungsverfahrens zurückzukehren.

Gemäß einer Ausgestaltung der Erfindung ist vorgesehen, dass als weiteres Ortungssystem ein Beschleunigungssensor verwendet wird.

Die Verwendung eines Beschleunigungssensors hat den Vorteil, dass dieser ohne die Auswertung externer Signale eine Ortung durchführen kann. Somit ist das zweite Ortungssystem anders als das erste Ortungssystem nicht abhängig von einer stehenden Kommunikationsverbindung zu der Zentraleinheit und/oder Navigationssatelliten und funktioniert daher immer (abgesehen von internen Fehlern im Warngerät, die auch zu einer Beeinträchtigung der Funktion des zweiten Ortungssystems führen könnten).

Allerdings benötigt die Durchführung einer Ortung mittels Beschleunigungssensoren eine Ortsinformation als Referenz, von der ausgehend eine relative Änderung des Ortes ermittelt werden kann. Es kann beispielsweise die letzte verfügbare Ortsinformation des ersten Ortungssystems (beispielsweise des GNSS-Systems), die eine absolute Ortsinformation ist, als Ausgangspunkt verwendet werden, um mittels des Beschleunigungssensors eine relative Bewegung des Warngerätes zu ermitteln. So kann der aktuelle Ort des Warngerätes und damit des Arbeiters nachverfolgt werden, solange das erste Ortungssystem keine Daten liefert.

Sobald wieder Daten vom ersten Ortungssystem vorliegen, können die Ortsinformationen des zweiten Ortungssystems mit diesen verglichen werden. Dabei ist zu berücksichtigen, dass ein Beschleunigungssensor eine relative Ortsänderung ermittelt, die mit der Zeit hinsichtlich Ortsabweichungen immer ungenauer wird. Sollte also mit dem ersten Ortungssystem eine erneute Ortung möglich sein, kann die so ermittelte Ortsinformationen die durch das weitere Ortungssystem (das heißt, den Beschleunigungssensor) ermittelte alternative Ortsinformationen ersetzen.

Gemäß einer Ausgestaltung der Erfindung ist vorgesehen, dass die Zentraleinheit einen Referenzpunkt mit bekannter Lage zur Zentraleinheit aufweist, an dem sich das Warngerät befinden soll, wenn die anfängliche Ortung des Warngerätes durchgeführt wird.

Durch die Definition eines Referenzpunktes, der eine bekannte Lage zur Zentraleinheit hat, kann das Warngerät bei der initialen Ortung, also bei der Bestimmung der anfänglichen Ortsinformation, in einer definierten Positionierung zur Zentraleinheit gehalten werden. Somit ist ein genauer Vergleich der anfänglichen Ortsinformation mit dem tatsächlichen Ort des Warngerätes möglich. Dies lässt vorteilhaft genaue Aussagen über die Qualität der Bestimmung des Referenzortes zu.

Als Referenzpunkt wird ein Punkt im Raum verstanden, welcher genau bekannte Koordinaten in einem mit der Zentraleinheit fest verbundenen Koordinatensystem aufweist. Dieser Punkt ist vorteilhaft auf der Zentraleinheit gekennzeichnet oder durch die Gestalt der Zentraleinheit definiert. Dabei muss der Punkt nicht notwendigerweise punktförmig dargestellt sein. Vorteilhaft ist beispielsweise eine Aufnahme für die Warngeräte, die eine genaue Positionierung des Warngerätes zur Zentraleinheit zulässt. Dadurch wird auch immer derselbe Referenzpunkt gewählt, an dem sich das Warngerät bei der Initialisierung befindet. Da dieses selbst auch eine Ausdehnung besitzt, liegt der Referenzpunkt dann in einem charakteristischen Bereich des Warngerätes. Hierzu eignet sich insbesondere das Funktionsmodul im Warngerät, welches das Ortungssystem verwirklicht, beispielsweise ein GNSS-Modul.

Gemäß einer Ausgestaltung der Erfindung ist vorgesehen, dass die Positionierung des Warngerätes an dem Referenzpunkt mit einem Sensor überprüft wird und die anfängliche Ortung nur durchgeführt wird, wenn die Positionierung des Warngerätes mittels des Sensors bestätigt wurde.

Als Sensor können im weiteren Sinne alle technischen Einrichtungen verwendet werden, die die Positionierung des Warngerätes in dem Referenzpunkt anzeigen können. Im einfachsten Fall sind dies elektrische Kontakte in einer für das Warngerät angepassten Aufnahmevorrichtung. Es können aber auch Näherungssensoren, optische Sensoren oder Hallsensoren Verwendung finden, die ein Sensorergebnis liefern, welches die Anwesenheit des Warngerätes in der Aufnahme anzeigen.

Dadurch, dass die anfängliche (initiale) Ortung nur durchgeführt werden kann, wenn das Sensorergebnis eine ordnungsgemäße Positionierung des Warngerätes zur Zentraleinheit bestätigt, kann sichergestellt werden, dass die initiale Ortung zuverlässig mit der geforderten Genauigkeit durchgeführt werden kann. Dies verringert vorteilhaft eine Fehlerwahrscheinlichkeit bei der anfänglichen Ortung, da ein Fehler im weiteren Betrieb des Warengerätes im schlimmsten Fall zu einer Gefährdung des das Warngerät tragenden Arbeiters führen könnte.

Gemäß einer Ausgestaltung der Erfindung ist vorgesehen, dass die Referenzposition des Warngerätes aktualisiert wird, wenn mit der Zentraleinheit eine Ortung mit einer Genauigkeit innerhalb eines zulässigen Vertrauensintervalls durchgeführt werden konnte.

Hierbei wird erfindungsgemäß die Möglichkeit genutzt, dass beispielsweise Ortungssysteme auf der Basis von GNSS die Möglichkeit haben, die Genauigkeit der ermittelten Ortsinformation einzuschätzen. Immer, wenn beispielsweise aufgrund eines guten Empfangs mehrerer Navigationssatelliten sowie der einen oder mehrerer Zentraleinheiten eine hohe Genauigkeit der aktuellen Ortsinformation ermittelt werden kann, kann diese dann als aktualisierte Referenzposition des Warngerätes für den weiteren Ablauf des Verfahrens genutzt werden. Mit anderen Worten wird die bestehende Referenzposition durch eine aktuelle Referenzposition ersetzt und abgespeichert.

Eine solche aktualisierte Referenzposition (und auch die erste Referenzposition) kann auch von dem zweiten Ortungssystem verwendet werden, wenn dieses funktionsbedingt eine relative Ortänderung ermittelt (beispielsweise bei Einsatz von Beschleunigungssensoren). Hierdurch kann eine parallel ablaufende alternative Ortsbestimmung durch das zweite Ortungssystem in Abständen aktualisiert werden, um zu vermeiden, dass sich Ortungsfehler aufgrund des relativen Ordnungsverfahrens immer weiter vergrößern. Das Aktualisieren erfolgt dadurch, dass die aktualisierte Referenzposition als Ortsinformationen für das alternative zweite Ortungssystem gesetzt wird und von dieser Referenzposition ausgehend eine Ortsänderung ermittelt wird, bis eine neue aktualisierte Referenzposition gesetzt wird.

Gemäß einer Ausgestaltung der Erfindung ist vorgesehen, dass das Vertrauensintervall eine Ortsabweichung von höchstens 2 m, bevorzugt höchsten 1 m, noch bevorzugter höchstens 0,5 m zulässt.

Als Vertrauensintervall wird im Zusammenhang mit der Erfindung also einer Abweichung des tatsächlichen Ortes (Aufenthaltsort des Arbeiters mit dem Warngerät) von dem durch die Ortsinformation definierten Ort (Ortsabweichung) angegeben. Mit anderen Worten darf sich der Arbeiter nur in einem durch das Vertrauensintervall definierten Umkreis des durch die Ortsinformation definierten Ortes befinden. Der Ort des Arbeiters muss sich mit genügender Genauigkeit feststellen lassen, damit die Gefährdungslage eingeschätzt werden kann.

Die genannte Aufgabe wird alternativ mit dem eingangs angegebenen Anspruchsgegenstand (Warnanlage) erfindungsgemäß auch dadurch gelöst, dass die Warnanlage dazu eingerichtet ist, das vorstehend erläuterte Verfahren auszuführen.

Die genannte Aufgabe wird alternativ mit dem eingangs angegebenen Anspruchsgegenstand (Warngerät für eine Warnanlage) erfindungsgemäß auch dadurch gelöst, dass das Warngerät eingerichtet ist, in einer Warnanlage (s. o.) eingesetzt zu werden.

Die genannte Aufgabe wird alternativ mit dem eingangs angegebenen Anspruchsgegenstand (Zentraleinheit für eine Warnanlage) erfindungsgemäß auch dadurch gelöst, dass das Warngerät eingerichtet ist, in einer Warnanlage (s. o.) eingesetzt zu werden.

Mit den genannten Vorrichtungen lassen sich die Vorteile erreichen, die im Zusammenhang mit dem obenstehend näher beschriebenen Verfahren bereits erläutert wurden. Das zum erfindungsgemäßen Verfahren Aufgeführte gilt entsprechend auch für die erfindungsgemäßen Vorrichtungen.

Des Weiteren wird ein Computerprogrammprodukt mit Programmbefehlen zur Durchführung des genannten erfindungsgemäßen Verfahrens und/oder dessen Ausführungsbeispielen beansprucht, wobei mittels des Computerprogrammprodukts jeweils das erfindungsgemäße Verfahren und/oder dessen Ausführungsbeispiele durchführbar sind.

Darüber hinaus wird eine Bereitstellungsvorrichtung zum Speichern und/oder Bereitstellen des Computerprogrammprodukts beansprucht. Die Bereitstellungsvorrichtung ist beispielsweise ein Speichereinheit, die das Computerprogrammprodukt speichert und/oder bereitstellt. Alternativ und/oder zusätzlich ist die Bereitstellungsvorrichtung beispielsweise ein Netzwerkdienst, ein Computersystem, ein Serversystem, insbesondere ein verteiltes, beispielsweise cloudbasiertes Computersystem und/oder virtuelles Rechnersystem, welches das Computerprogrammprodukt vorzugsweise in Form eines Datenstroms speichert und/oder bereitstellt.

Die Bereitstellung erfolgt in Form eines Programmdatenblocks als Datei, insbesondere als Downloaddatei, oder als Datenstrom, insbesondere als Downloaddatenstrom, des Computerprogrammprodukts. Diese Bereitstellung kann beispielsweise aber auch als partieller Download erfolgen, der aus mehreren Teilen besteht. Ein solches Computerprogrammprodukt wird beispielsweise unter Verwendung der Bereitstellungsvorrichtung in ein System eingelesen, sodass das erfindungsgemäße Verfahren auf einem Computer zur Ausführung gebracht wird.

Weitere Einzelheiten der Erfindung werden nachfolgend anhand der Zeichnung beschrieben. Gleiche oder sich entsprechende Zeichnungselemente sind jeweils mit den gleichen Bezugszeichen versehen und werden nur insoweit mehrfach erläutert, wie sich Unterschiede zwischen den einzelnen Figuren ergeben.

Bei den im Folgenden erläuterten Ausführungsbeispielen handelt es sich um bevorzugte Ausführungsformen der Erfindung. Bei den Ausführungsbeispielen stellen die beschriebenen Komponenten der Ausführungsformen jeweils einzelne, unabhängig voneinander zu betrachtende Merkmale der Erfindung dar, welche die Erfindung jeweils auch unabhängig voneinander weiterbilden und damit auch einzeln oder in einer anderen als der gezeigten Kombination als Bestandteil der Erfindung anzusehen sind. Des Weiteren sind die beschriebenen Komponenten auch durch mit den vorstehend beschriebenen Merkmalen der Erfindung kombinierbar.

Es zeigen:
Figur 1 ein Ausführungsbeispiel der erfindungsbemäßen Warnanlage mit ihren Wirkzusammenhängen schematisch,
Figur 2 ein Ausführungsbeispiel einer Computer-Infrastruktur der Zentraleinheit sowie des Warngerätes gemäß Figur 1 als Blockschaltbild, wobei die einzelnen Funktionseinheiten Programmmodule enthalten, die jeweils in einem oder mehreren Prozessoren ablaufen können und die Schnittstellen demgemäß softwaretechnisch oder hardwaretechnisch ausgeführt sein können,
Figur 3 ein Ausführungsbeispiel des erfindungsgemäßen Verfahrens als Flussdiagramm, wobei die einzelnen Verfahrensschritte einzeln oder in Gruppen durch Programmmodule verwirklicht sein können und wobei die Funktionseinheiten und Schnittstellen gemäß Figur 2 beispielhaft angedeutet sind.

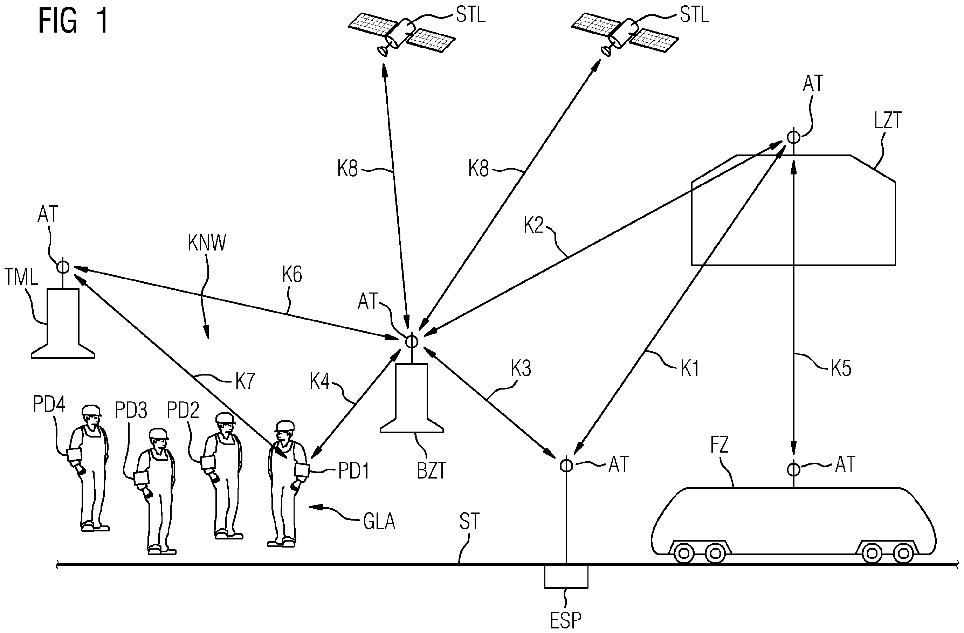

In Fig. 1 ist eine Warnanlage in Form eines Rottenwarnsystems dargestellt. Eine Rotte gemäß Fig. 1 besteht aus vier Gleisarbeitern GLA, die an einer Strecke ST Arbeiten verrichten (nicht näher dargestellt). Die Strecke ST kann während der Bauarbeiten jedoch von Fahrzeugen FZ befahren werden. Daher ist die Warnanlage installiert, welche die Gleisarbeiter GLA im Gefahrfall warnt. Zu diesem Zweck ist eine Zentraleinheit (Baustellenzentrale) BZT vorgesehen, mit der Endgeräte PD1 ... PD4 in Verbindung stehen (angedeutet durch eine vierte Kommunikationsverbindung K4). Über die vierten Kommunikationsverbindungen K4 kann eines der genannten Endgeräte PD1 ... PD4 angesteuert werden, um den betreffenden Gleisarbeiter GLA beispielsweise vor dem nahenden Fahrzeug FZ zu warnen.

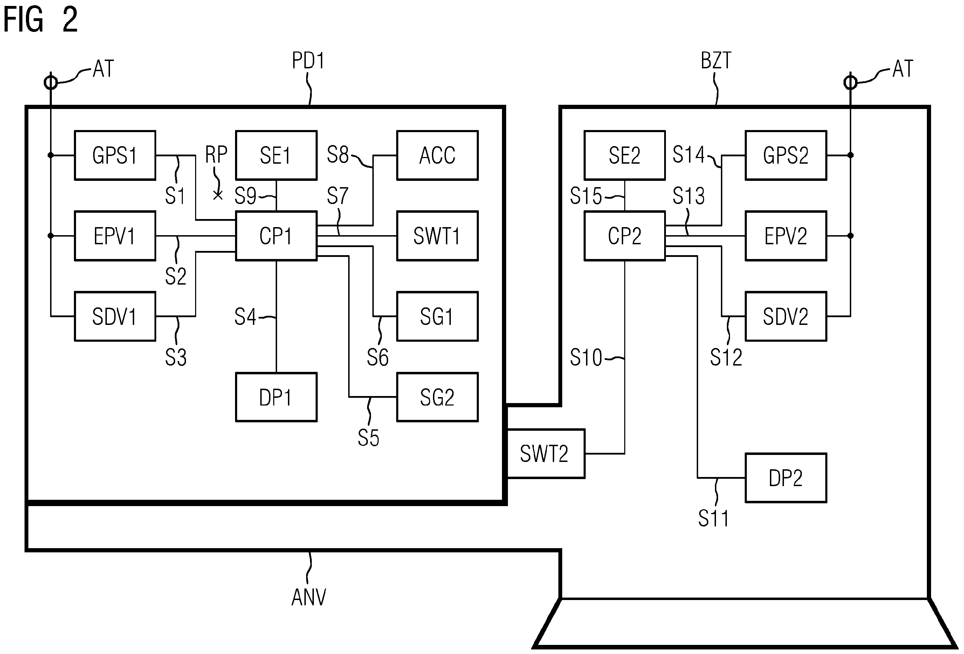

Die Zentraleinheit BZT steht weiterhin über eine zweite Kommunikationsverbindung K2 mit einer Leitzentrale LZT und/oder über eine dritte Kommunikationsverbindung K3 mit einem Einschaltpunkt ESP in Verbindung. Auch der Einschaltpunkt ESP kann mit der Leitzentrale LZT über eine erste Kommunikationsverbindung K1 in Verbindung stehen. Auch das Fahrzeug FZ steht in Kommunikationsverbindung K5 mit der Leitzentrale LZT. Die Kommunikationsverbindungen werden durch Antennen AT über Funk hergestellt (die Antennen der Endgeräte PD1 ... PD4 sind nicht näher dargestellt, vgl. aber Figur 2).

Außerdem ist eine zweite Zentraleinheit in Figur 1 dargestellt, die als Terminal TML fungiert und der besseren Übersichtlichkeit halber im Folgenden so bezeichnet wird. Dies bedeutet, dass diese nur über eine sechste Kommunikationsverbindung K6 mit der Zentraleinheit BZT kommuniziert sowie über siebente Kommunikationsverbindungen K7 mit den Warngeräten PD1 ... PD4 (dargestellt nur für das erste Warngerät PD1) . Durch die gemeinsame Verwendung der Zentraleinheit BZT sowie des Terminals TML wird das Aktionsgebiet, in dem die Gleisarbeiter GLA geortet werden können, vergrößert (nicht näher dargestellt).

In Figur 1 weiter dargestellt sind zwei Satelliten STL. Diese können über Kommunikationsverbindungen K8 Ortungssignale beispielsweise an das erste Warngerät PD1 (und auch die anderen Warngeräte) senden, wobei weitere Ortungssignale über die vierte Kommunikationsverbindung K4 von der Zentraleinheit BZT sowie über die siebente Kommunikationsverbindung K7 von der als Terminal TML geschalteten weiteren Zentraleinheit empfangen werden können. Dieser Vorgang ist aus Gründen der Übersichtlichkeit nur für das erste Warngerät PD1 dargestellt. Nicht dargestellt, aber nach gleichem Prinzip ist eine Ortung des zweiten Warengerätes PD2, des dritten Warngerät PD3 des vierten Warngeräts des PD4 möglich.

Über die verschiedenen Kommunikationsverbindungen K1 ... K7 besteht ein Kommunikationsnetzwerk KNW, welches jeden der Gleisarbeiter GLA in das Rottenwarnsystem einbindet. Hierbei entsteht vorteilhaft Redundanz bei den Ausgabeeinheiten, sodass beispielsweise der Ausfall einer Ausgabeeinheit nicht dazu führt, dass der betreffende Gleisarbeiter GLA keine Informationen mehr erhält, da er immer noch durch eine andere Ausgabeeinheit gewarnt wird. Ebenso ermöglichen die Kommunikationsverbindungen K2 und K3 Redundanz bei der Übertragung wesentlicher Informationen für das Rottenwarnsystem.

In Figur 2 ist das erste Warngerät PD1 (analog könnte auch eines der anderen Warngeräte dargestellt sein) in einer Aufnahme ANV der Zentraleinheit BZT dargestellt. Von dieser Aufnahme ANV wird das Warngerät PD1 gehalten. Die Funktionseinheiten des Warngerätes PD1 und der Zentraleinheit BZT werden im Folgenden kurz beschrieben.

Das Warngerät PD1 weist einen ersten Computer CP1. Dieser ist über eine neunte Schnittstelle S9 mit einer ersten Speichereinrichtung SE1 verbunden. Außerdem ist ein erstes GNSS-Modul GPS1 über eine erste Schnittstelle S1, eine erste Empfangsvorrichtung EPV1 über eine zweite Schnittstelle S2 sowie eine erste Sendevorrichtung SDV1 über eine dritte Schnittstelle S3 mit dem ersten Computer CP1 verbunden. Die letztgenannten Funktionseinheiten weisen eine Antenne AT auf. Dadurch können Satellitensignale empfangen werden sowie das Senden und Empfangen innerhalb des gemäß Figur 1 dargestellten Kommunikationsnetzwerkes gewährleistet werden.

Auch die Zentraleinheit BZT weist einen zweiten Computer CP2 mit einer über eine fünfzehnte Schnittstelle S15 verbundenen zweiten Speichereinrichtung SE2 auf. Mit dem zweiten Computer CP2 ist über vierzehnte Schnittstelle S14 ein zweites GNSS-Modul GPS2, über eine dreizehnte Schnittstelle S13 eine zweite Empfangsvorrichtung EPV2 und über eine zwölfte Schnittstelle S12 eine zweite Sendevorrichtung SDV2 verbunden, die ebenfalls mit einer Antenne AT verbunden sind.

Die GNSS-Module GPS1, GPS2 erfüllen Ortungsfunktionen für die erste Warnvorrichtung PD1 und die Zentraleinheit BZT. Zusätzlich weist das Warngerät PD1 einen Beschleunigungssensor (vorzugsweise einen Dreiachsensensor) AC auf, mit dem Relativbewegungen des Warngerätes PD1 vorzugsweise in drei Raumachsen erfasst werden können. Dieser ist über eine achte Schnittstelle S8 mit dem ersten Computer CP1 verbunden.

Zur Kommunikation nach außen weist das Warngerät PD1 einen Signalgeber SG1 auf, der über eine sechste Schnittstelle S6 mit dem ersten Computer CP1 verbunden ist und einen zweiten Signalgeber SG2, der über eine fünfte Schnittstelle S5 mit dem ersten Computer CP1 verbunden ist. Außerdem hat das Warngerät PD1 eine erste Ausgabeeinrichtung DP1 in Form eines Displays, welche über eine vierte Schnittstelle S4 mit dem ersten Computer CP1 verbunden ist. Über diese Ausgabeeinrichtung können Informationen übermittelt werden, beispielsweise Textnachrichten, aber auch eine dargestellte Karte mit dem ermittelten Standort des Warngerätes PD1 und damit des Arbeiters, der das Warngerät trägt. Auf diese Weise kann der Arbeiter durch Begutachtung seiner tatsächlichen Umgebung intuitiv feststellen, ob der dargestellte Standort auf der Karte, der der berechneten Position entspricht, mit seinem tatsächlichen Standort übereinstimmt. In gleicher Weiser kann eine zweite Ausgabeeinrichtung DP2 in Form eines Displays verwendet werden, welche über eine elfte Schnittstelle S11 mit dem zweiten Computer CP2 der Zentraleinheit BZT verbunden ist. Hier kann beispielsweise ein Supervisor, wie ein Vorarbeiter, die Position aller Warngeräte PD1 ... PD4 auf einer Karte verfolgen.

Die Signalgeber SG1, SG2 sollen zur Warnung des Gleisarbeiters dienen. Diese können unterschiedliche Sinne des Arbeiters ansprechen. Beispielsweise kann über den ersten Signalgeber SG1 ein Vibrationsalarm ausgelöst werden. Der zweite Signalgeber SG2 könnte beispielsweise eine Leuchtdiode sein. Selbstverständlich sind auch andere Prinzipien für die Signalgeber SG1, SG2 denkbar. Beispielsweise kann ein akustischer Alarm ausgegeben werden.

In Figur 2 ist dargestellt, wie das erste Warngerät PD1 an der Zentraleinheit BZT initialisiert werden kann. Zu diesem Zweck wird das erste Warngerät PD1 in die Aufnahmevorrichtung ANV eingelegt. Um eine Initialisierung durchzuführen, muss zum einen ein erster Schalter SWT1 aktiviert werden, der über eine siebente Schnittstelle S7 mit dem ersten Computer CP1 verbunden ist und das Warngerät PD1 aktiviert. Außerdem muss ein zweiter Schalter SWT2 aktiviert werden, der über eine zehnte Schnittstelle S10 mit dem zweiten Computer CP2 der Zentraleinheit BZT verbunden ist. Dieser Schalter SWT2 wird durch Einsetzen des Warngerätes PD1 in die Aufnahmevorrichtung ANV mechanisch aktiviert, sodass eine korrekte Positionierung des ersten Warngerätes PD1 in der Aufnahmevorrichtung ANV gewährleistet ist. Dies ist von Bedeutung, damit eine Referenzpunkt RP mit definierten Koordinaten bzgl. der Zentraleinheit BZT an einer definierten Stelle im Gehäuse der ersten Warnvorrichtung PD1 liegt.

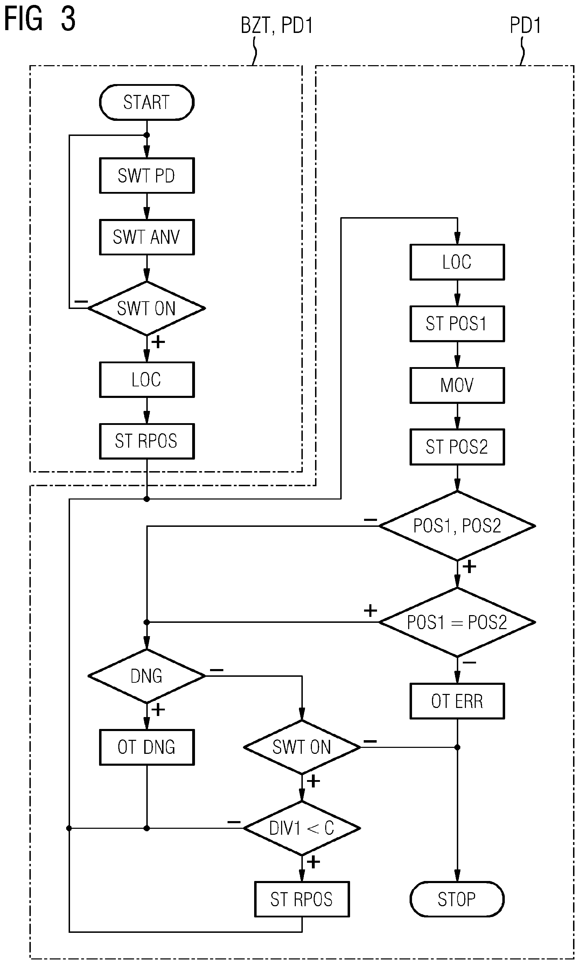

Das Verfahren der Initialisierung und des Betriebs der ersten Warnvorrichtung PD1 (analog der anderen Warnvorrichtung PD2 ... PD4) ist in Figur 3 dargestellt. Durch strichpunktierte Linien ist angedeutet, dass ein Teil der Verfahrensschritte gemeinsam durch die Zentraleinheit BZT und das erste Warngerät PD1 durchgeführt werden (Initialisierung) und ein Teil der Verfahrensschritte allein durch das Warngerät PD1 durchgeführt wird (Ortung). Selbstverständlich ist auch beim Verfahren der Ortung die Zentraleinheit BZT beteiligt, allerdings sind die Grundfunktionen des Warngerätes autark, da dies ein sicheres Funktionieren unabhängig von einer Kommunikationsverbindung K4 zwischen der Zentraleinheit BZT und dem ersten Warngerät PD1 ermöglicht (vgl. Figur 1).

Um das Verfahren zu starten, ist in einem Einschaltschritt SWT PD das Warngerät PD1 einzuschalten. Durch Einlegen des ersten Warngerätes in die Aufnahmevorrichtung ANV wird ein weiterer Einschaltschritt SWT ANV durchgeführt, sodass die Initialisierung beginnen kann. In einem Abfrageschritt SWT ON wir abgefragt, ob die Einschaltprozedur gelungen ist. Ist dies nicht der Fall, wird diese wiederholt. Ist dies der Fall, wird ein Lokalisierungsschritt LOC zur Generierung von initialen Ortsinformationen im Rahmen einer anfänglichen Ortung durchgeführt. Diese werden in einem Festlegungsschritt ST RPOS als Referenzposition definiert. Damit besitzt das erste Warngerät PD1 eine hochgenaue Ortsinformation, um den Betrieb zum Schutz des Arbeiters aufzunehmen.

Hierbei werden wiederholt die folgenden Verfahrensschritte durchlaufen. In einem Lokalisierungsschritt LOC wird eine aktuelle Ortsinformation POS1 ermittelt und in einem Festlegungsschritt ST POS1 als aktuelle Position erfasst. In einem Erfassungsschritt MOV für die Relativbewegung des Warngerätes PD1 ausgehend von der Referenzposition RPOS wird die aktuelle Position gleichzeitig alternativ ermittelt und in einem Festlegungsschritt ST POS2 gesetzt.

In einem nachfolgenden Abfrageschritt wird ermittelt, ob eine Ortsinformation von der aktuellen Position POS1 sowie eine alternative Ortsinformation in Form der aktuellen Position POS2 vorliegen. Ist dies nicht der Fall, wird für die weitere Betrachtung nur die vorliegende aktuelle Position, also entweder POS1 oder POS2 weiterverarbeitet. Ist dies der Fall, wird in einem Abfrageschritt POS1=POS2 abgefragt, ob die Positionen im Rahmen eines zulässigen Toleranzbereiches gleich sind. Ist dies der Fall, wird mit der Position weitergearbeitet. Ist dies nicht der Fall, so erfolgt in einem Ausgabeschritt OT ERR die Ausgabe eines Fehlers und das Verfahren wird unterbrochen (STOP).

Mit den ermittelten Positionen wird ein Abfrageschritt DNG durchgeführt, ob mit Blick auf die Gesamtsituation (beispielsweise ein herannahender Zug) eine Gefahr für den betreffenden Gleisarbeiter, repräsentiert durch das erste Warngerät PD1, vorliegt. Ist dies der Fall, erfolgt ein Ausgabeschritt OT-DNG für die Gefahr, der darin bestehen kann, dass die zu Figur 2 beschriebenen Signalgeber SG1, SG2 aktiviert werden.

Besteht keine Gefahr, so wird das Verfahren nach einem Abfrageschritt SWT ON gestoppt, wenn das Warngerät abgeschaltet wird. Ist das Warngerät weiter eingeschaltet (SWT ON positiv) wird in einem Abfrageschritt DIV>C geprüft, wie genau die ermittelte aktuelle Position POS1 ist. Liegt die zu erwartende Abweichung DIV unterhalb eines kritischen Wertes C, wird die aktuelle Position POS1 in einem Festlegungsschritt ST RPOS als neue Referenzposition RPOS festgelegt. Danach wiederholt sich der Verfahrensablauf mit den Festlegungsschritten ST POS1 und ST POS2, falls das Verfahren nicht gestoppt wird.

### Bezugszeichenliste

- PD1 ... PD4: Warngerät
- BZT: Zentraleinheit
- TML: Zentraleinheit als Terminal
- STL: Satellit
- GLA: Arbeiter, insbesondere Gleisarbeiter
- ESP: Einschaltpunkt
- LZT: Leitzentrale
- FZ: Fahrzeug
- AT: Antenne
- ST: Strecke
- K1 ... K8: Kommunikationsverbindungen
- KNW: Kommunikationsnetzwerk

- CP1 ... CP2: Computer
- SE1 ... SE2: Speichereinrichtung
- EPV1 ... EPV2: Empfangsvorrichtung
- SDV1 ... SDV2: Sendevorrichtung
- SWT1 ... SWT2: Schalter
- GPS1 ... GPS2: GNSS-Modul
- SG1 ... SG2: Signalgeber
- Dp1 ... DP2: Display
- ACC: Beschleunigungssensor
- ANV: Aufnahmevorrichtung
- RP: Referenzpunkt
- S1 ... S15: Schnittstelle

- SWT PD: Einschaltschritt Warngerät
- SWT ANV: Einschaltschritt in Aufnahmevorrichtung
- SWT ON: Abfrageschritt eingeschaltet?
- LOC: Lokalisierungsschritt
- MOV: Erfassungsschritt Relativbewegung
- ST RPOS: Festlegungsschritt Referenzposition
- ST POS1 ... 2: Festlegungsschritt aktuelle Position
- POS1, POS2: Abfrageschritt Positionen vorhanden?
- POS1 = POS2: Abfrageschritt Positionen ähnlich?
- DNG: Abfrageschritt Gefahr vorhanden?
- OT DNG: Ausgabeschritt Gefahr
- OT ERR: Ausgabeschritt Fehler
- DIV < C: Abfrageschritt POS1 genau?

## Patentansprüche

1. Verfahren zum Betreiben einer Warnanlage mit mindestens einem Warngerät (PD1 ... PD4) für den persönlichen Gebrauch durch einen Arbeiter, insbesondere Gleisarbeiter (GLA), bei dem bei einer Inbetriebnahme des Warngerätes zwischen dem Warngerät (PD1 ... PD4) und mindestens einer Zentraleinheit (BZT) der Warnanlage eine Kommunikationsverbindung (K4) aufgebaut wird,
**dadurch gekennzeichnet,**
**dass** nach dem Aufbau der Kommunikationsverbindung (K4) rechnergestützt
• das Warngerät (PD1 ... PD4) durch die Zentraleinheit (BZT) mit einem ersten Ortungssystem wiederholt geortet wird,
• aus einer anfänglichen Ortung eine initiale Ortsinformation für das Warngerät (PD1 ... PD4) generiert wird,
• die initiale Ortsinformation als Referenzposition des Warngerätes (PD1 ... PD4) gespeichert wird.

2. Verfahren nach Anspruch 1
**dadurch gekennzeichnet,**
**dass** die Ortung des Warngerätes (PD1 ... PD4) durch GNSS-Signale erfolgt, die durch die Zentraleinheit (BZT) erzeugt werden.

3. Verfahren nach Anspruch 2,
**dadurch gekennzeichnet,**
**dass** die Ortung des Warngerätes (PD1 ... PD4) durch GPS-Signale erfolgt, die durch die Zentraleinheit (BZT) erzeugt werden, wobei die L1-Frequenz und die L2-Fequenz des GPS-Verfahrens verwendet werden.

4. Verfahren nach einem der voranstehenden Ansprüche,
**dadurch gekennzeichnet,**
**dass** die ermittelte Ortsinformation des Warngerätes (PD1 ... PD4) mit einer Ausgabeeinrichtung angezeigt wird.

5. Verfahren nach Anspruch 4,
**dadurch gekennzeichnet,**
**dass** die ermittelte Ortsinformation erst als Referenzposition gespeichert wird, wenn die mit der Ausgabereinrichtung angezeigte Ortsinformation bestätigt wird.

6. Verfahren nach einem der voranstehenden Ansprüche,
**dadurch gekennzeichnet,**
**dass** das Warngerät (PD1 ... PD4) mit einem zweiten Ortungssystem mindestens eine alternative Ortsinformation generiert.

7. Verfahren nach Anspruch 6,
**dadurch gekennzeichnet,**
**dass** als weiteres Ortungssystem ein Beschleunigungssensor (ACC) verwendet wird.

8. Verfahren nach einem der voranstehenden Ansprüche,
**dadurch gekennzeichnet,**
**dass** die Zentraleinheit (BZT) einen Referenzpunkt (RP) mit bekannter Lage zur Zentraleinheit (BZT) aufweist, an dem sich das Warngerät (PD1 ... PD4) befinden soll, wenn die anfängliche Ortung des Warngerätes (PD1 ... PD4) durchgeführt wird.

9. Verfahren nach einem der voranstehenden Ansprüche,
**dadurch gekennzeichnet,**
**dass** die Positionierung des Warngerätes (PD1 ... PD4) an dem Referenzpunkt (RP) mit einem Sensor überprüft wird und die anfängliche Ortung nur durchgeführt wird, wenn die Positionierung des Warngerätes (PD1 ... PD4) mittels des Sensors bestätigt wurde.

10. Verfahren nach einem der voranstehenden Ansprüche,
**dadurch gekennzeichnet,**
**dass** die Referenzposition des Warngerätes (PD1 ... PD4) aktualisiert wird, wenn mit der Zentraleinheit (BZT) eine Ortung mit einer Genauigkeit innerhalb eines zulässigen Vertrauensintervalls durchgeführt werden konnte.

11. Verfahren nach einem der voranstehenden Ansprüche,
**dadurch gekennzeichnet,**
**dass** das Vertrauensintervall eine Ortsabweichung von höchstens 2 m, bevorzugt höchsten 1 m, noch bevorzugter höchstens 0,5 m zulässt.

12. Warnanlage mit mindestens einem Warngerät (PD1 ... PD4) für den persönlichen Gebrauch durch einen Arbeiter, insbesondere Gleisarbeiter (GLA), bei dem bei einer Inbetriebnahme des Warngerätes (PD1 ... PD4) zwischen dem Warngerät und mindestens einer Zentraleinheit (BZT) der Warnanlage eine Kommunikationsverbindung (Kl ... K8) aufgebaut wird,
**dadurch gekennzeichnet,**
**dass** die Warnanlage dazu eingerichtet ist, ein Verfahren gemäß einem der voranstehenden Ansprüche auszuführen.

13. Warngerät (PD1 ... PD4) für eine Warnanlage
**dadurch gekennzeichnet,**
**dass** das Warngerät (PD1 ... PD4) eingerichtet ist, in einer Warnanlage gemäß dem voranstehenden Anspruch eingesetzt zu werden.

14. Zentraleinheit für eine Warnanlage
**dadurch gekennzeichnet,**
**dass** das Warngerät (PD1 ... PD4) eingerichtet ist, in einer Warnanlage gemäß dem Anspruch 12 eingesetzt zu werden.

15. Computerprogrammprodukt mit Programmbefehlen zur Durchführung des Verfahrens nach einem der Ansprüche 1 - 11.

16. Bereitstellungsvorrichtung für das Computerprogrammprodukt nach dem letzten voranstehenden Anspruch, wobei die Bereitstellungsvorrichtung das Computerprogrammprodukt speichert und/oder bereitstellt.
